# FASCICULE DE BREVET EUROPEEN

(11) **EP 0 943 073 B1**
(45) Date de publication et mention de la délivrance du brevet: **02.05.2002**
(21) Numéro de dépôt: 97948971.3
(22) Date de dépôt: 01.12.1997
(51) Int. Cl.: F24J 2/50, F24J 2/04

(54) **DISPOSITIF POUR COLLECTER L'ENERGIE SOLAIRE ET LA TRANSFERER SUR UN MILIEU RECEPTEUR A CHAUFFER**
VERFAHREN ZUM AUFFANGEN VON SONNENENERGIE UND ZUR ÜBERTRAGUNG AUF EINEN ZU HEIZENDEN EMPFÄNGER
DEVICE FOR CAPTURING SOLAR ENERGY AND TRANSFERRING IT ONTO A RECEIVING MEDIUM TO BE HEATED

(30) Priorité: 03.12.1996 FR 9614809
(43) Date de publication de la demande: 22.09.1999
(73) Titulaire: MASA-THERM S.A., 2043 Boudevilliers (CH)
(72) Inventeur: RYLEWSKI, Eugeniusz, Michal, F-78470 Saint Rémy lès Chevreuse (FR)
(74) Mandataire: Bezault, Jean
(86) Numéro de dépôt international: FR9702169
(87) Numéro de publication internationale: WO9825088

(56) Documents cités:
- EP-A- 0 564 357
- AU-A- 8 342 575
- DE-A- 2 646 262
- FR-A- 2 346 648
- US-A- 4 034 736
- US-A- 4 207 869

## Description

L'invention concerne un dispositif pour collecter l'énergie solaire et la transférer sur un milieu récepteur à chauffer.

On connaît déjà, d'après DE-A-2 646 262, un dispositif de ce type qui comprend une multiplicité d'éléments profilés sensiblement horizontaux, espacés les uns des autres et superposés pour former un rideau ayant une face externe propre à être exposée à un rayonnement solaire et une face interne propre à être disposée du côté du milieu récepteur, les éléments profilés définissant entre eux une multiplicité de canaux d'air s'étendant entre la face externe et la face interne, des moyens de fermeture étant prévus pour immobiliser l'air contenu dans les canaux, et dans lequel les éléments profilés sont réalisés sous la forme de lamelles transparentes ou translucides ayant des propriétés de faible absorption du rayonnement solaire et de faible conduction thermique, et possédant un profil présentant une partie terminale ascendante aboutissant à la face interne du rideau.

Les éléments profilés permettent de collecter l'énergie solaire et de la conduire vers la face interne du rideau située du côté du milieu récepteur qui peut être, par exemple, un mur extérieur d'un bâtiment ou un volume d'air à l'intérieur d'un bâtiment. Il se produit aussi un réchauffement de l'air contenu dans les canaux définis entre les éléments profilés.

D'autres collecteurs solaires de structure apparentée sont connus aussi par les documents AU-A-83425/75, US-A-4 034 736 et EP-A-564 357.

L'invention a principalement pour but de simplifier la structure de ces éléments profilés, tout en permettant d'obtenir des performances thermiques améliorées par rapport à celles obtenues par le dispositif collecteur connu par DE-A-2 646 262.

L'invention propose à cet effet un dispositif collecteur du type défini précédemment dans lequel les lamelles sont obtenues à partir d'un voile d'un matériau mince qui est un matériau tissé ou non tissé à base de fibres minérales ou synthétiques, en particulier de fibres de verre, le matériau présentant une bonne transparence et une faible rétention d'énergie de radiation.

Le terme "rideau" est utilisé dans son sens général pour désigner l'ensemble formé par les lamelles superposées qui constituent une sorte de panneau ajouré. Ce terme ne doit pas être interprété dans son sens étroit comme désignant une pièce de tissu d'ameublement ou analogue.

Du fait que les lamelles du rideau sont transparentes ou translucides, et formées à partir d'un voile d'un matériau mince, on obtient un meilleur captage de l'énergie solaire, la lumière captée pouvant accéder jusqu'à la face interne du rideau, c'est-à-dire jusqu'au milieu récepteur à chauffer.

Par ailleurs, le captage est amélioré du fait que les lamelles ont une faible absorption du rayonnement solaire et une faible conduction thermique, ce qui limite les pertes d'énergie.

L'expression "faible conduction thermique" entend inclure aussi le cas où les lamelles sont non conductrices de la chaleur.

Comme les lamelles sont formées à partir d'un voile d'un matériau mince, elles peuvent être supportées par une structure allégée.

De façon idéale, le matériau dont sont formées les lamelles est non conducteur de la chaleur. Il est en effet important que les lamelles soient non conductrices dans le sens de la pénétration de l'énergie solaire, c'est-à-dire de la face externe vers la face interne du rideau.

Le matériau dont sont formées les lamelles peut, le cas échéant, être imprégné d'une substance visant à améliorer leurs caractéristiques d'étanchéité, de transparence, de brillance, de réflexion, de rigidité ou de longévité.

Dans une première forme générale de réalisation de l'invention, les lamelles ont un profil généralement rectiligne disposé incliné par rapport à l'horizontale, en sorte que les canaux d'air sont dirigés ascendants de la face externe à la face interne du rideau.

Cette configuration particulière facilite la montée de l'air chaud, contenu dans les canaux, vers la face interne du rideau.

Dans une deuxième forme générale de réalisation de l'invention, les lamelles ont un profil général en forme de V, en sorte que les canaux présentent successivement une partie descendante et une partie ascendante, de la face externe à la face interne du rideau.

Ce profil particulier en forme de V présente notamment les avantages suivants.

Tout d'abord, le rayonnement solaire incident peut pénétrer dans l'épaisseur du rideau, tout en traversant moins de lamelles, ce qui permet au milieu récepteur de pouvoir absorber une grande part du rayonnement solaire incident.

L'angle des lamelles à l'entrée (face externe du rideau) détermine l'angle d'incidence du rayonnement solaire à favoriser. Il sera adapté au climat et à la latitude du lieu et éventuellement aussi à l'orientation de la façade où le dispositif sera implanté.

Ensuite, la face interne et la face externe du rideau ne se "voient" pas mutuellement, puisqu'elles sont séparées par des lamelles en forme de V, ce qui permet d'obtenir une bonne isolation de radiation.

En outre, la structure en forme de V des lamelles permet d'augmenter leur rigidité.

Dans une troisième forme générale de réalisation de l'invention, le dispositif comprend des lamelles à profil général rectiligne et des lamelles à profil général en forme de V.

Selon une autre caractéristique de l'invention, les lamelles sont disposées proches les unes des autres de manière à ménager un intervalle de valeur réduite qui est au moins cinq fois plus faible que la largeur (profondeur) du rideau entre sa face externe et sa face interne. Ceci permet de réaliser des canaux d'air ayant une hauteur réduite par rapport à leur profondeur et de limiter les mouvements d'air par convexion.

Avantageusement, l'intervalle entre deux lamelles consécutives est compris entre 6 et 20 mm pour une largeur du rideau comprise entre 6 et 20 cm.

Selon une autre caractéristique de l'invention, les lamelles sont séparées les unes des autres et reliées entre elles par des moyens de suspension disposés de place en place du côté de la face externe et du côté de la face interne du rideau.

Dans une forme de réalisation de l'invention, ces moyens de suspension comprennent une pluralité de fils verticaux munis chacun de boucles présentant deux à deux un intervalle correspondant à l'intervalle des lamelles, losdites boucles servant de moyens d'attache des lamelles.

De façon préférentielle, à chaque fil vertical à boucles est associé un fil vertical lisse qui traverse successivement les lamelles et qui passe successivement à travers les boucles, ce qui permet d'assurer une liaison entre les lamelles et le fil à boucles auquel il est associé.

Dans une autre forme de réalisation de l'invention, chacune des lamelles comporte deux séries de boucles espacées formées respectivement à partir de deux bords longitudinaux de la lamelle, les boucles d'une lamelle traversant les boucles d'une lamelle situées immédiatement en dessous.

Ainsi, la fixation des lamelles entre elles s'effectue de proche en proche par coopération des boucles de deux lamelles adjacentes.

Les lamelles, au lieu d'être séparées les unes des autres, peuvent être formées par un repliage en accordéon ou en zigzag d'une nappe du matériau mince, des moyens de suspension étant alors disposés de place en place du côté de la face externe et du côté de la face interne du rideau.

Dans une autre forme de réalisation de l'invention, les lamelles à profil en V sont séparées par des espaceurs, en forme de douilles, disposés de façon alternée avec les lamelles, dans la région du sommet du profil en V, le dispositif comprenant des moyens de suspension disposés de place en place et traversant alternativement les lamelles et les espaceurs.

En variante, les espaceurs peuvent être situés aux extrémités latérales des lamelles et assurer la fermeture latérale des espaces interlamellaires. En ce cas les espaceurs peuvent être réalisés en différents matériaux, tels que, par exemple, matière plastique, fibres minérales agglomérées, etc.

Dans les formes de réalisation précitées, les moyens de suspension comprennent au moins en partie un fil rigide ou souple en un matériau choisi parmi un métal, une matière plastique, ou encore du verre.

Dans une autre forme de réalisation, les lamelles sont maintenues de place en place par deux éléments de fixation, en forme de peignes ou de créneaux, ayant des dents régulièrement espacées, ces éléments étant introduits dans des fentes tranversales des lamelles de manière que leurs dents s'étendent dans des directions opposées et étant susceptibles d'être réglés transversalement et longitudinalement pour modifier l'orientation des lamelles.

Selon une autre caractéristique de l'invention, les moyens de fermeture du rideau sont prévus du côté de la face interne et/ou de la face externe du rideau.

Les moyens de fermeture situés du côté de la face interne du rideau peuvent comprendre une plaque de fond appliquée au contact ou à distance d'un mur.

Cette plaque de fond peut être formée d'une plaque en tôle métallique, par exemple du cuivre, de l'aluminium, ou du fer galvanisé.

Il peut s'agir aussi d'une tôle métallique à surface sélective, ou encore d'un film métallique à surface sélective, lequel est collé sur un support, en principe à base minérale.

On peut utiliser encore une plaque à base minérale éventuellement munie d'un enduit favorisant l'absorpt:ion du rayonnement solaire.

Des exemples de matériaux convenant pour la réalisation de cette plaque sont le verre massif, des fibres de verre tissées ou non tissées, du bois aggloméré lié à du plâtre ou à du ciment, un matériau à base de silicate de calcium, etc.

Dans le cas où la plaque est munie d'un enduit favorisant l'absorption du rayonnement solaire, on utilise avantageusement une surface sélective qui absorbe bien le rayonnement solaire, mais qui émet peu dans l'infrarouge, pour procurer une meilleure isolation.

Les moyens de fermeture situés du côté de la face externe du rideau peuvent être constitués, par exemple, par une plaque de verre ou de matière plastique ou un tissu de verre, éventuellement enduit pour assurer une meilleure transparence, une meilleure étanchéité et/ou une meilleure résistance aux intempéries.

Le milieu récepteur auquel s'applique le dispositif de l'invention est généralement le mur extérieur d'un bâtiment, un volume d'air à l'intérieur d'un bâtiment, ou encore un fluide caloporteur circulant dans des canalisations situées le long d'un mur d'un bâtiment.

Dans la description qui suit, faite à titre d'exemple, on se réfère aux dessins annexés, sur lesquels :
- la figure 1 est une vue partielle en coupe transversale d'un dispositif selon l'invention utilisé comme rideau extérieur appliqué contre un milieu récepteur;
- la figure 2 est une vue partielle en coupe transversale d'un autre dispositif selon l'invention utilisé comme rideau intérieur disposé derrière une vitre d'un bâtiment;
- la figure 3 est une vue partielle en coupe transversale d'un dispositif selon l'invention formé à partir de lamelles séparées;
- la figure 4 est une vue partielle de dessus d'une lamelle_ du dispositif de la figure 3;
- la figure 5 est une vue partielle en perspective d'un autre dispositif selon l'invention, obtenu à partir de lamelles séparées;
- la figure 6 est une vue partielle en coupe transversale d'un autre dispositif selon l'invention formé à partir de lamelles séparées;
- la figure 7 est une vue partielle de dessus d'une lamelle du dispositif de la figure 6;
- la figure 8 est une vue partielle en coupe transversale d'une nappe en matériau mince repliée en accordéon ou en - zigzag;
- la figure 9 est une vue partielle en coupe transversale d'un dispositif selon l'invention dont les lamelles sont formées à partir de la nappe repliée de la figure 8;
- la figure 10 est une vue partielle en coupe transversale d'un dispositif selon l'invention comprenant un moyen de protection antisolaire;
- la figure 11 est une vue partielle en coupe transversale d'un -dispositif selon l'invention utilisé comme rideau intérieur et formé de lamelles à profil en V;
- la figure 12 est une vue partielle en coupe transversale d'un dispostif selon l'invention comportant des lamelles à profil rectiligne et des lamelles à profil en V;
- la figure 13 est une vue partielle d'un côté d'un dispositif selon l'invention utilisant des éléments de fixation en forme de peignes ou de créneaux ;
- la figure 14 est une vue partielle de deux éléments en forme de peignes ou de créneaux ;
- la figure 15 est une vue partielle de dessus d'une lamelle munie d'ouvertures de forme transversale ;
- la figure 16 est une vue partielle en perspective d'une lamelle selon la figure 15 suspendue par deux créneaux selon la figure 14 ;
- la figure 17 est une vue analogue à celle de la figure 13, dans laquelle les lamelles sont inclinées ;
- la figure 18 est une vue frontale du dispositif de la figure 13 ;
- la figure 19 est une vue analogue à celle de la figure 18 montrant le dispositif en cours de pliage ;
- la figure 20 est une vue partielle en coupe transversale d'un autre rideau à lamelles en profil en V;
- la figure 21 est une vue partielle en coupe longitudinale du dispositif à lamelles à profil en V selon la figure 20 ;
- la figure 22 est une vue partielle en coupe transversale d'un dispositif selon l'invention utilisé comme rideau extérieur appliqué pour le chauffage d'un fluide caloporteur.

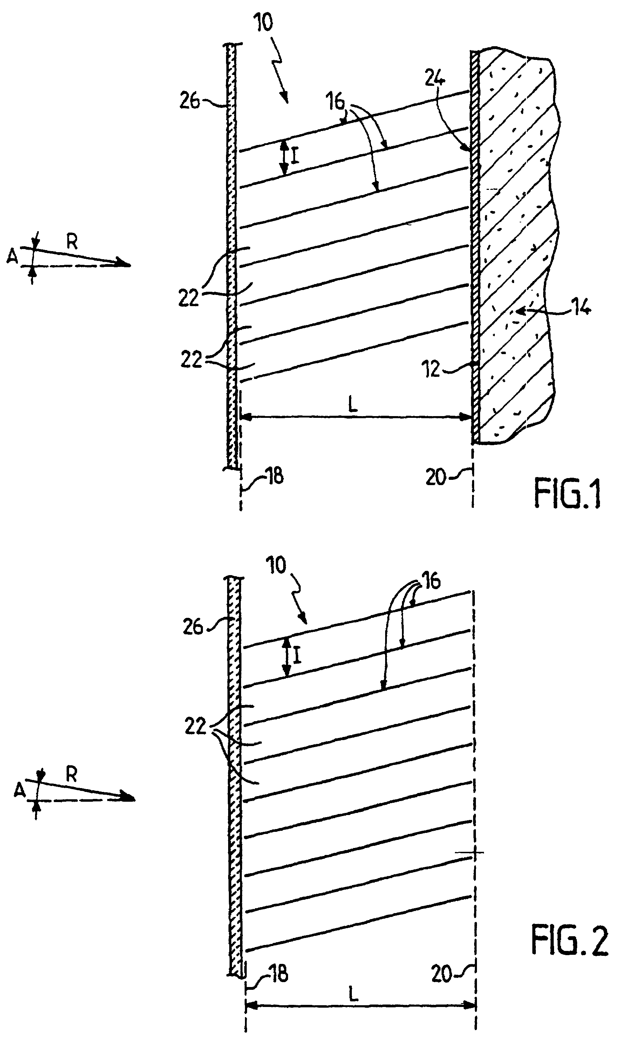

On se réfère à la figure 1 qui représente un dispositif collecteur solaire 10 selon l'invention, appliqué contre un milieu récepteur qui, dans cet exemple, constitue la surface externe 12 d'un mur vertical 14 d'un bâtiment.

Le dispositif collecteur solaire 10 comprend une multiplicité d'éléments profilés 16 identiques, sensiblement horizontaux, espacés les uns des autres et superposés dans un plan vertical.

Ces éléments profilés 16, encore appelés "lamelles", forment un rideau possédant une face externe 18 propre à être exposée à un rayonnement solaire R et une face interne 20 propre à être disposée du côté de la surface réceptrice.

Les lamelles 16 ont, dans l'exemple, un profil rectiligne. Elles sont transparentes ou translucides et ont des propriétés de faible absorption du rayonnement solaire et de faible conduction thermique. Elles sont obtenues à partir d'un voile d'un matériau mince, qui est en outre thermiquement isolant, c'est-à-dire non conducteur de la chaleur.

Les lamelles 16 sont disposées proches les unes des autres, de manière à ménager un intervalle I de valeur réduite, qui est au moins cinq fois plus faible que la largeur L du rideau, telle que définie entre sa face externe 18 et sa face interne 20.

Dans l'exemple représenté, l'intervalle I entre deux lamelles 16 consécutives est compris entre 10 et 15 mm pour une largeur L du rideau comprise entre 8 et 20 cm.

Le profil des lamelles est -incliné par rapport à l'horizontale de manière que tout le profil, y compris sa partie terminale du côté de la face interne 20 du rideau, soit ascendant.

Les lamelles 16 définissent ainsi entre elles une multiplicité de canaux d'air 22 dirigés ascendants de la face externe 18 à la face interne 20 du rideau.

Le dispositif de la figure 1 comprend en outre des moyens de fermeture 24 prévus du côté de la face interne du rideau. Dans l'exemple, ces moyens de fermeture 24 sont formés par une plaque de fond.

La plaque de fond peut comprendre une plaque de tôle métallique, par exemple en cuivre, aluminium ou fer galvanisé.

On peut utiliser en variante une tôle métallique à surface sélective, c'est-à-dire une tôle ayant subi un traitement sélectif pour-procurer une bonne absorption solaire et une émission réduite dans l'infrarouge.

Cette tôle peut, le cas échéant, être collée sur un support, en principe à base minérale, par exemple à base de silicate de calcium.

Il peut s'agir encore d'une plaque à base minérale, éventuellement munie d'un enduit favorisant l'absorption du rayonnement solaire. Cet enduit peut être constitué par exemple d'une peinture sélective qui émet peu dans l'infrarouge, pour procurer une meilleure isolation.

Egalement, le dispositif comprend d'autres moyens de fermeture situés du côté de la face externe 18 du rideau. Ces moyens de fermeture sont, dans l'exemple, constitués par une plaque transparente 26 en verre ou en matière plastique, ou encore par un tissu translucide destiné à laisser passer le rayonnement solaire R.

Il est également envisageable d'utiliser, comme moyens de fermetures situés du côté de la face externe du rideau, une paroi opaque telle que, par exemple, une tôle peinte.

En variante, il est possible de laisser la face externe 18 complètement ouverte ou encore de la munir d'une grille de protection contre les chocs, puisque cette face est exposée à l'extérieur.

Une telle grille a aussi la fonction d'assurer une protection solaire, notamment en été. Elle peut être conçue de façon qu'il y ait un maximum d'énergie solaire qui pénètre en hiver et un minimum qui pénètre en été. Ceci peut être valable pour toutes les orientations de parois (Sud, Est, Ouest, etc).

Il est à noter que la grille précitée peut s'appliquer aussi bien dans le cas où la face externe 18 est ouverte, que dans le cas où celle-ci est fermée par une plaque 26, de verre ou autre matériau.

Les moyens de fermeture 24 et 26 permettent d'immobiliser l'air contenu dans les canaux 22. Les lamelles transparentes ou translucides 16 permettent à la lumière (rayonnement solaire R) de parvenir jusqu'à la face interne 20 du rideau, c'est-à-dire jusqu'au mur 14 qui constitue le milieu récepteur à chauffer.

Du fait que les lamelles sont transparentes ou translucides et qu'elles ont une absorption réduite, il en résulte un meilleur captage de l'énergie solaire.

L'énergie solaire ainsi captée se propage de la face externe 18 vers la face interne 20 du rideau en suivant le parcours ascendant des canaux 22. Du fait de l'espacement réduit des lamelles 16, on obtient une réduction des mouvements d'air par convexion.

Par ailleurs, du fait que les lamelles sont formées d'un matériau thermiquement isolant et que les canaux sont fermés chacun à au moins une extrémité, on obtient des propriétés améliorées de rétention de la chaleur.

Ainsi, la plus grande partie du rayonnement solaire de petite longueur d'onde atteignant la face interne 20 se transforme en rayonnement calorifique de grande longueur d'onde qui ne peut plus s'échapper car cette face interne 20 est fermée.

L'air échauffé par le rayonnement solaire, est immobilisé du côté de la face interne 20 du rideau et assure ainsi le chauffage de la surface réceptrice 12, tout en formant un isolant empêchant un refroidissement rapide de la surface réceptrice 12 lorsque le dispositif 10 ne reçoit plus de rayonnement solaire.

L'orientation particulière des lamelles 16 est choisie en fonction notamment de la latitude géographique du lieu où doit être implanté le dispositif, afin de tenir compte de l'angle d'inclinaison A du rayonnement solaire R par rapport à l'horizontale.

On peut ainsi s'arranger pour assurer le chauffage de la surface réceptrice 12 uniquement en période hivernale lorsque l'angle A est en dessous d'un seuil prédéterminé et empêcher ce chauffage en période d'été lorsque l'angle A est au-dessus d'un seuil déterminé.

Dans la forme de réalisation de la figure 2, à laquelle on se réfère maintenant, le dispositif collecteur solaire 10 est formé également d'une multiplicité d'ailettes 16 analogues à celles de la figure 1.

Toutefois, dans cet exemple, les lamelles 16 sont disposées à l'intérieur du bâtiment, derrière la vitre 26. Il en résulte que les canaux 22 sont fermés uniquement du côté de la face externe 18 par la vitre 26, et ouverts du côté de la face interne 20. Comme indiqué précédemment, les lamelles sont formées à partir d'un voile d'un matériau mince, transparent ou translucide.

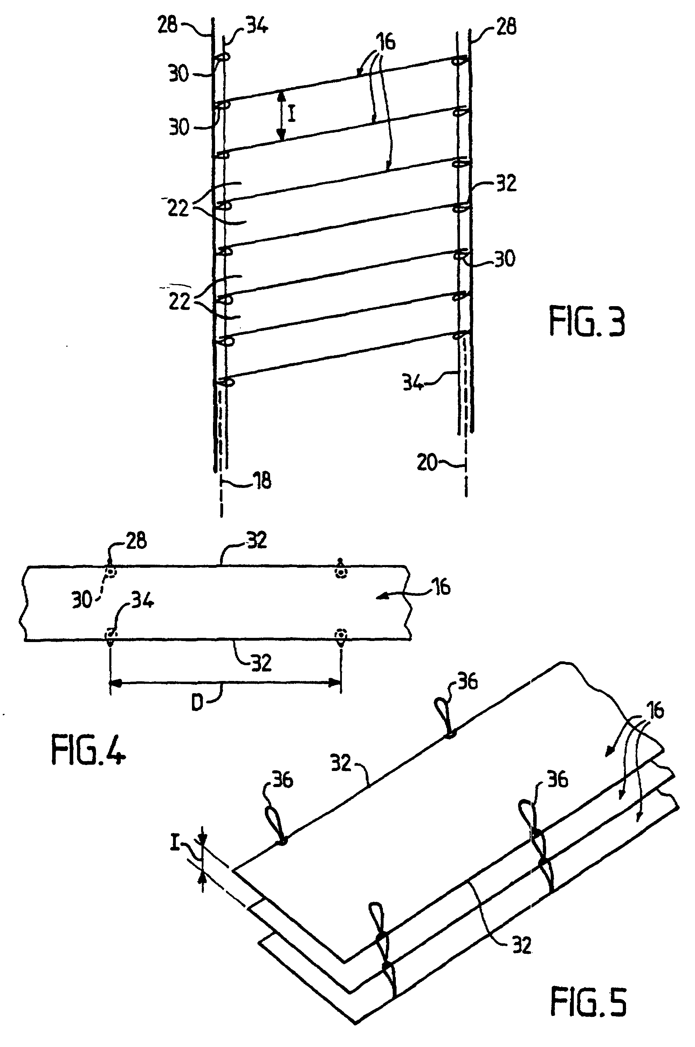

Dans la forme de réalisation des figures 3 et 4, les lamelles 16 sont séparées les unes des autres et reliées entre elles par des moyens de suspension comprenant des fils de suspension 28 disposés de place en place, par exemple à une distance D de 50 cm (figure 4), à la fois du côté de la face externe 18 et du côté de la face interne 20 du rideau. Les fils 28 sont disposés verticalement et sont munis de boucles espacées 30 ménageant entre elles un intervalle I correspondant à l'intervalle des lamelles. Chacun des fils 28 peut être formé à partir d'un matériau approprié, tel qu'un métal, une matière plastique ou encore du verre. Les boucles peuvent être formées de toute manière appropriée. Chacune des boucles 30 est destinée à supporter une lamelle 16 le long de l'un de ses deux bords longitudinaux 32.

Pour assurer la fixation, le dispositif comprend en outre des fils verticaux lisses 34 réalisés dans le même matériau que les fils 28, ou dans un autre matériau. Chacun des fils 34 traverse l'épaisseur des lamelles 16, le long d'un bord longitudinal 32 et passe successivement à travers les boucles 30, comme on le voit sur la figure 3. Ainsi, les lamelles 16 viennent reposer sur les boucles 30 et sont solidarisées à ces boucles par les fils lisses 34.

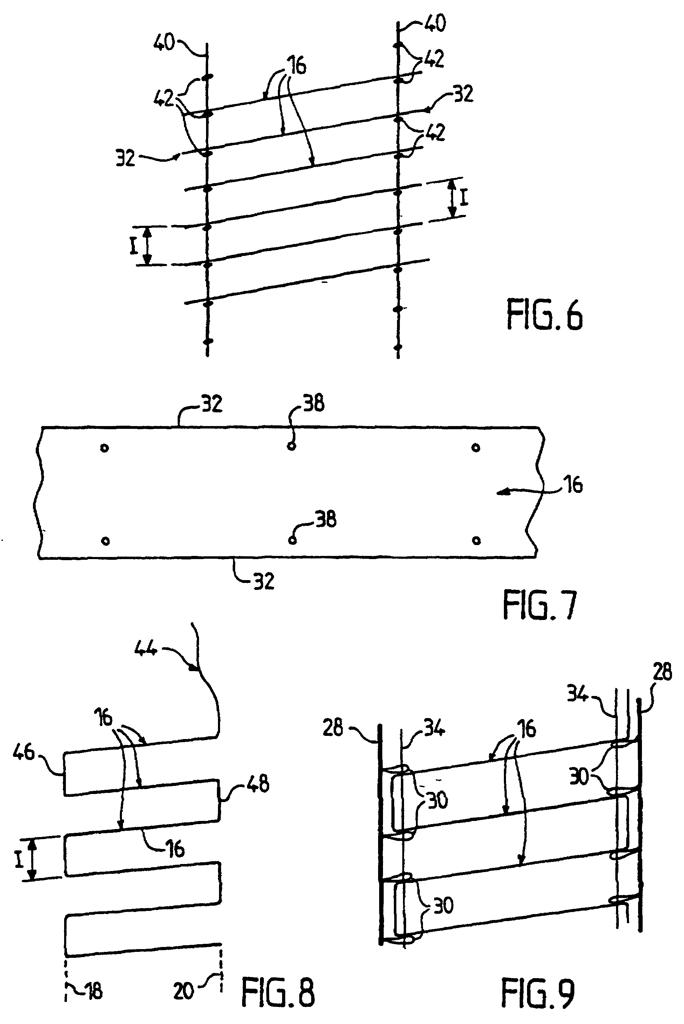

Dans la forme de réalisation de la figure 5, à laquelle on se réfère maintenant, chacune des lamelles 16 comporte des boucles 36 formées de place en place, à partir de chacun des deux bords longitudinaux 32 de la lamelle. Ces boucles 36 ont, lorsqu'elles ont une configuration allongée, une hauteur correspondant à l'intervalle I souhaité entre les lamelles 16.

Comme on peut le voir, les boucles 36 d'une lamelle traversent les boucles d'une lamelle située immédiatement en dessous, et ainsi de suite, ce qui permet une fixation de proche en proche.

Dans la forme de réalisation des figures 6 et 7, à laquelle on se réfère maintenant, les lamelles 16 sont également indépendantes et formées de préférence en un matériau du type non-tissé présentant deux séries de trous ou perforations 38 prévus respectivement à proximité des deux bords longitudinaux 32 (figure 7). Les lamelles sont maintenues par des fils de suspension 40 espacés les uns des autres et situés du côté de la face externe et de la face interne du rideau, les fils 40 étant propres à traverser les perforations 38. Pour retenir les lamelles 16, les fils de suspension 40 comportent des noeuds 42 régulièrement espacés, la hauteur entre les noeuds correspond à l'intervalle I souhaité pour les lamelles.

Dans la forme de réalisation des figures 8 et 9, les lamelles 16 sont formées par repliage en accordéon ou en zigzag d'une nappe 44 en matériau mince. Cette nappe comprend des parties horizontales ou inclinées formant les lamelles 16 et des parties verticales 46 et 48 qui relient lesdites lamelles et qui sont situées alternativement du côté de la face externe 18 et du côté de la face interne 20 du rideau. Ces parties 46 et 48 constituent en même temps des moyens de fermeture des canaux d'air. Les parties 46 et 48 ont une hauteur qui correspond à l'intervalle I entre les lamelles.

Le dispositif des figures 8 et 9 comprend en outre des moyens de suspension qui peuvent être analogues à ceux représentés à la figure 3. Ces moyens comprennent, de chaque côté du rideau, des fils 28 munis de boucles espacées 30 et des fils lisses 34 traversant les boucles 30 et les lamelles 16.

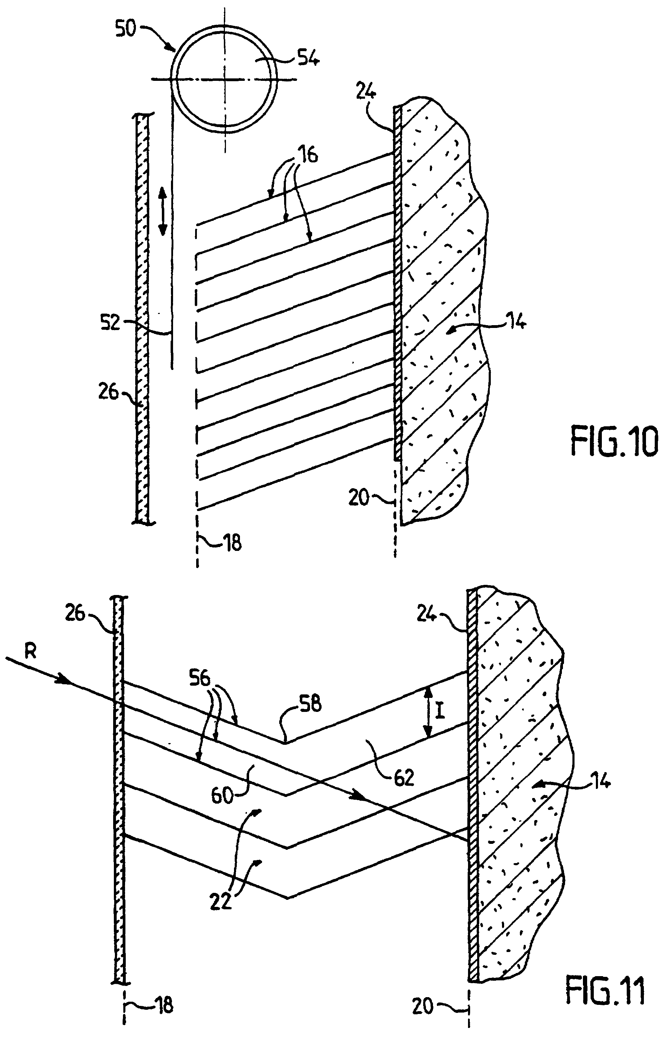

On se réfère maintenant à la figure 10 qui représente un dispositif analogue à celui de la figure 1.

Le dispositif de la figure 10 comprend en outré un moyen de protection antisolaire 50 qui, dans l'exemple, comprend un store 52 disposé verticalement entre la face externe 18 du rideau et la vitre 26. Le store 52 est propre à s'enrouler sur un rouleau horizontal 54 ou se dérouler à partir de ce dernier.

Lorsque le store 52 est déroulé, il occulte le dispositif collecteur solaire et le rend ainsi inopérant. Il doit être noté que le moyen de protection antisolaire peut être également utilisé dans un dispositif du type de celui de la figure 2, dans lequel le rideau est placé à l'intérieur d'un bâtiment.

En outre, le store 52 peut s'appliquer à tous types de rideaux, que les lamelles aient un profil rectiligne disposé incliné ou que les lamelles aient un profil en V, comme décrit dans les figures qui suivent.

Par ailleurs, le moyen de protection antisolaire est susceptible de nombreuses variantes. Ainsi, au lieu de faire appel à un store, il est possible d'utiliser des éléments ou panneaux coulissants, ou encore des panneaux amovibles.

On se réfère maintenant à la figure 11 qui représente un dispositif analogue à celui de la figure 1, si ce n'est qu'il comporte des lamelles 56 à profil en V présentant chacune un sommet 58 dirigé vers le bas. Les lamelles ménagent deux à deux un intervalle I de valeur réduite. Elles délimitent ainsi entre elles des canaux 22 qui présentent successivement de la face externe 18 à la face interne 20, une partie descendante 60 et une partie ascendante 62. Il en résulte que le rayonnement incident R peut pénétrer le plus loin possible dans l'épaisseur du rideau tout en traversant le moins possible de lamelles 56, ce qui permet au milieu récepteur 14 d'absorber une grande partie du rayonnement solaire incident R. En outre, les faces 18 et 20 du rideau ne se "voient" pas mutuellement, ce qui permet d'obtenir une bonne isolation. De surcroît, le profil en forme de V augmente la rigidité des lamelles 56.

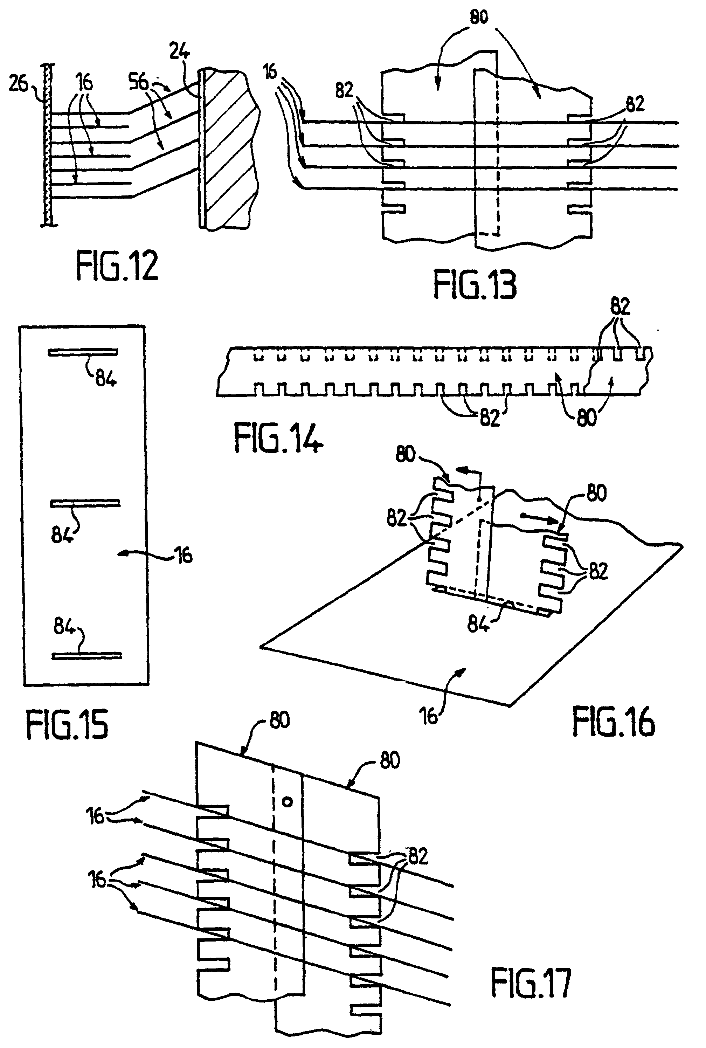

Dans la forme de réalisation de la figure 12, le dispositif comprend des lamelles 16 à profil généralement rectiligne qui alternent avec des lamelles 56 à profil en V. Il est possible soit d'alterner rigoureusement ces deux types de lamelles, soit d'alterner des groupes de plusieurs lamelles à profil généralement rectiligne, avec des lamelles individuelles à profil en V.

Dans la forme de réalisation des figures 13 à 16, le dispositif comprend des lamelles 16 à profil rectiligne, fixées de place en place par une paire d'éléments 80 en forme de peignes ou de créneaux possédant des dents 82 régulièrement espacées. Ces éléments 80 sont introduits par paires au travers d'ouvertures transversales 84 des lamelles 16 (figure 15), dans une position telle que les deux éléments d'une même paire sont superposés (figure 14), leurs dents respectives 82 s'étendant dans des directions opposées. Ensuite, les deux éléments sont écartés l'un de l'autre comme représenté par les flèches de la figure 16, ce qui permet d'assurer le maintien des lamelles 16. Les éléments 80 peuvent être ensuite déplacés axialement les uns par rapport aux autres pour régler l'orientation des lamelles. Dans le cas de la figure 13, les lamelles sont perpendiculaires à la direction axiale des éléments 80 tandis que, dans la figure 17, les lamelles s'étendent dans une direction oblique par rapport à la direction axiale des éléments 80.

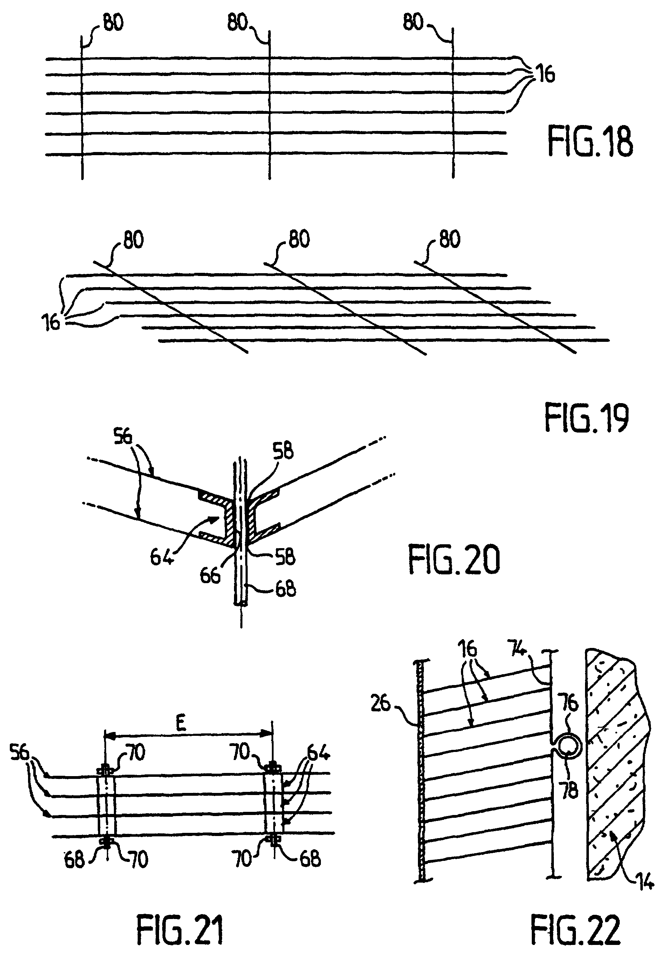

Les éléments 80 peuvent être disposés au préalable par paires dans les ouvertures 84 des lamelles 16 (figure 18) et être ensuite repliés comme montré à la figure 19, ce qui facilite le stockage. Le repliage peut s'effectuer jusqu'à une position dans laquelle les éléments 80 sont pratiquement parallèles aux lamelles.

Les éléments 80 formant peignes ou créneaux peuvent être réalisés dans un matériau transparent ou translucide, par exemple en tissu de verre.

Les éléments 80 conviennent également à la fixation de lamelles 16 à profil rectiligne en alternance avec des lamelles 56 à profil en V, comme montré à la figure 12.

On se réfère maintenant à la figure 20 qui montre une autre variante de réalisation de l'invention, dans laquelle les lamelles 56 sont des profilés en V en un matériau sensiblement rigide. Les lamelles 56 sont disposées de façon alternée avec des espaceurs 64 en forme de douilles disposés chacun entre les sommets respectifs 58 de deux lamelles 56 adjacentes. Ces espaceurs 64, formant douilles comprennent chacun un passage axial 66.

Les lamelles sont suspendues et maintenues espacées par des moyens de suspension constitués ici par des fils ou des tiges 68 disposés de place en place. Les tiges ou fils 66 sont disposés avec un écart E (figure 21) et traversent à chaque fois, et de façon alternée, le sommet 58 d'une lamelle 56 et un espaceur 64 au travers de son passage axial 66.

Des bagues de serrage 70 sont avantageusement prévues pour maintenir l'empilement des lamelles 56 et des espaceurs- 64 (figure 21). Ces derniers peuvent être des tronçons de tubes ou des tronçons de profilés extrudés.

Les lamelles 16 ou 56 peuvent être formées à partir d'un matériau tissé ou d'un matériau non tissé. Comme matériaux tissés, on peut utiliser avantageusement un tissu de fibres de verre ou encore un tissu de fibres synthétiques. Comme matériaux non-tissés, on envisage surtout un matériau non-tissé formé à partir de fibres de verre. Le matériau constitutif de lamelles peut être utilisé nu ou bien être imprégné.

Il peut être-notamment imprégné d'une substance pour améliorer son étanchéité, sa transparence, sa brillance, sa réflexion (par exemple par utilisation de paillettes d'aluminium), sa solidité (pour que les fibres ne glissent pas et ne se cassent pas lors de la manipulation), ou encore sa longévité (stabilité chimique).

En outre, l'utilisation d'une telle substance d'imprégnation permet de renforcer la rigidité des lamelles spécialement dans le cas où l'on utilise un matériau non tissé pour former des lamelles à profil en V.

Différentes substances d'imprégnation peuvent être utilisées, notamment des substances du type acrylique, en particulier des mousses acryliques, etc.

On se réfère maintenant à la figure 22 qui constitue une autre variante de réalisation de l'invention. Dans cette variante, le rideau est appliqué contre une tôle métallique 74, avantageusement en cuivre, qui définit des logements 76 pour la réception d'une canalisation 78 permettant la circulation d'un fluide caloporteur. La tôle 74 est située le long d'un mur 14.

Ainsi, dans cette application particulière, le dispositif de l'invention permet de réchauffer le fluide caloporteur circulant dans les canalisations.

Le dispositif de l'invention permet ainsi de collecter l'énergie solaire et de la transférer sur un milieu récepteur, en particulier sur un mur d'un bâtiment, tout en formant un bon isolant avec un coefficient de pertes thermiques réduit.

## Revendications

1. Dispositif pour collecter l'énergie solaire et la transférer sur un milieu récepteur à chauffer, comprenant une multiplicité d'éléments profilés (16; 56) sensiblement horizontaux, espacés les uns des autres et superposés pour former un rideau (10) ayant une face externe (18) propre à être exposée à un rayonnement solaire et une face interne (20) propre à être disposée du côté du milieu récepteur (12), les éléments profilés (16) définissant entre eux une multiplicité de canaux d'air (22) s'étendant entre la face externe (18) et la face interne (20), des moyens de fermeture étant prévus pour immobiliser l'air contenu dans les canaux (22), et dans lequel les éléments profilés (16; 56) sont réalisés sous la forme de lamelles transparentes ou translucides ayant des propriétés de faible absorption du rayonnement solaire et de faible conduction thermique, et possédant un profil présentant une partie terminale ascendante aboutissant à la face interne (20) du rideau,
**caractérisé en ce que** les lamelles (16; 56) sont obtenues à partir d'un voile d'un matériau mince qui est un matériau tissé ou non tissé à base de fibres minérales ou synthétiques, en particulier de fibres de verre, ce matériau présentant une bonne transparence et une faible rétention d'énergie de radiation.

2. Dispositif selon la revendications 1, **caractérisé en ce que** le matériau dont sont formées les lamelles (16; 56) est imprégné d'une substances visant à améliorer les caractéristiques d'étanchéité, de transparence, de brillance, de réflexion, de rigidité ou de longévité des lamelles.

3. Dispositif selon l'une des revendications 1 et 2, **caractérisé en ce que** les lamelles (16) ont un profil généralement rectiligne disposé incliné par rapport à l'horizontale, en sorte que les canaux d'air sont dirigés ascendants de la face externe (18) à la face interne (20) du rideau.

4. Dispositif selon l'une des revendications 1 et 2, **caractérisé en ce que** les lamelles (56) ont un profil général en forme de V, en sorte que les canaux d'air présentent successivement une partie descendante (60) et une partie ascendante (62), de la face externe (18) à la face interne (20) du rideau.

5. Dispositif selon l'une des revendications 1 et 2, **caractérisé en ce qu'**il comprend des lamelles (16) ayant un profil généralement rectiligne et des lamelles (56) ayant un profil général en forme de V.

6. Dispositif selon l'une des revendications 1 à 5, **caractérisé en ce que** les lamelles (16; 56) sont disposées proches les unes des autres, de manière à ménager entre elles un intervalle (I) de valeur réduite, au moins cinq fois plus faible que la largeur (L) du rideau entre sa face externe (18) et sa face interne (20).

7. Dispositif selon la revendication 6, **caractérisé en ce que** l'intervalle (I) entre deux lamelles consécutives (16; 56) est compris entre 6 et 20 mm, pour une largeur (L) du rideau comprise entre 6 et 20 cm.

8. Dispositif selon l'une des revendications 1 à 7, **caractérisé en ce que** les lamelles (16; 56) sont séparées les unes des autres et reliées entre elles par des moyens de suspension (28, 34; 36; 40) disposés de place en place du côté de la face externe (18) et du côté de la face interne (20) du rideau.

9. Dispositif selon la revendication 8, **caractérisé en ce que** les moyens de suspension comprennent une pluralité de fils verticaux (28) munis chacun de boucles (30) présentant deux à deux un intervalle (I) correspondant à l'intervalle (I) des lamelles (16; 56), lesdites boucles (30) servant de moyens d'attache des lamelles (16; 56).

10. Dispositif selon la revendication 9, **caractérisé en ce qu'**à chaque fil vertical (28) muni de boucles (30) est associé un fil vertical lisse (34) qui traverse successivement les lamelles (16; 56) et passe par les boucles (30).

11. Dispositif selon la revendication 8, **caractérisé en ce que** chacune des lamelles (16; 56) comporte deux séries de boucles espacées (36) formées respectivement à partir de deux bords longitudinaux (32) de la lamelle, les boucles (36) d'une lamelle traversant les boucles d'une lamelle situées immédiatement en dessous.

12. Dispositif selon l'une des revendications 1 à 3, **caractérisé en ce que** les lamelles (16) sont formées par un repliage en accordéon ou en zigzag d'une nappe (44) du matériau mince, des moyens de suspension (28, 34) étant disposés de place en place du côté de la face externe (18) et du côté de la face interne (20) du rideau.

13. Dispositif selon la revendication 4, **caractérisé en ce que** les lamelles (56) à profil en V comprennent des espaceurs (64) en forme de douilles disposés de façon alternée avec les lamelles dans la région du sommet (58) du profil en V, ainsi que des moyens de suspension (68) disposés de place en place et traversant alternativement les lamelles (56) et les espaceurs (64).

14. Dispositif selon l'une des revendications 8 à 13, **caractérisé en ce que** les moyens de suspension (68) comprennent au moins un fil rigide ou souple en un matériau choisi parmi un métal, une matière plastique ou du verre.

15. Dispositif selon l'une des revendications 1 à 7, **caractérisé en ce que** les lamelles (16; 56) sont maintenues de place en place par deux éléments de fixation (80), en forme de peignes ou de créneaux, ayant des dents (82) régulièrement espacées, ces éléments étant introduits dans des fentes transversales (84) des lamelles de manière que leurs dents s'étendent dans des directions opposées et étant susceptibles d'être réglés transversalement et longitudinalement pour modifier l'orientation des lamelles.

16. Dispositif selon l'une des revendications 1 à 15, **caractérisé en ce que** les moyens de fermeture sont prévus du côté de la face externe (18) et/ou de la face interne (20) du rideau.

17. Dispositif selon la revendication 16, **caractérisé en ce que** les moyens de fermeture du côté de la face interne (20) du rideau comprennent une plaque de fond (24) appliquée au contact ou à distance d'un mur.

18. Dispositif selon la revendication 17, **caractérisé en ce que** la plaque de fond (24) est choisie parmi une tôle métallique; une tôle métallique à surface sélective; un film métallique à surface sélective, collé sur un support en principe à base minérale; une plaque à base minérale éventuellement munie d'un enduit favorisant l'absorption du rayonnement solaire.

## Patentansprüche

1. Vorrichtung, um Sonnenenergie aufzufangen und sie auf ein zu erwärmendes Empfängermedium zu übertragen, die eine Vielzahl von im wesentlichen horizontalen Profilelementen (16; 56) aufweist, die voneinander beabstandet und übereinander angeordnet sind, um einen Vorhang (10) mit einer Außenfläche (18), die dazu geeignet ist, der Sonnenbestrahlung ausgesetzt zu werden, und einer Innenfläche (20) auszubilden, die dazu geeignet ist, auf der Seite des Empfängermediums (12) angeordnet zu werden, wobei die Profilelemente (16) zwischeneinander eine Vielzahl von Luftkanälen (22) bilden, die sich zwischen der Außenfläche (18) und der Innenfläche (20) erstrecken, wobei Verschlußeinrichtungen vorgesehen sind, um die in den Kanälen (22) enthaltene Luft festzuhalten, und bei der die Profilelemente (16; 56) in Form transparenter oder durchscheinender Lamellen mit den Eigenschaften einer geringen Sonnenstrahlungsabsorption und einer geringen Wärmeleitfähigkeit realisiert sind und ein Profil besitzen, das ein aufsteigendes Abschlußteil aufweist, das an die Innenfläche (20) des Vorhanges angrenzt,
**dadurch gekennzeichnet,**
**daß** die Lamellen (16; 56) aus einem Flächenkörper aus dünnem Material hergestellt sind, das ein gewebtes oder nicht gewebtes Material auf der Basis von mineralischen oder synthetischen Fasern, insbesondere Glasfasern, ist, wobei das Material eine gute Transparenz und eine geringe Strahlungsenergierückhaltefähigkeit aufweist.

2. Vorrichtung nach Anspruch 1,
**dadurch gekennzeichnet,**
**daß** das Material, aus dem die Lamellen (16; 56) ausgebildet sind, mit einer Substanz imprägniert ist, die dazu dient, die Dichtigkeits-, Transparenz-, Brillianz-, Reflexions-, Steifigkeits- oder Lebensdauereigenschaften der Lamellen zu verbessern.

3. Vorrichtung nach einem der Ansprüche 1 und 2,
**dadurch gekennzeichnet,**
**daß** die Lamellen (16) ein im allgemeinen geradliniges Profil haben, das bezüglich der Horizontalen geneigt angeordnet ist, derart, daß die Luftkanäle von der Außenfläche (18) zur Innenfläche (20) des Vorhanges aufsteigend ausgerichtet sind.

4. Vorrichtung nach einem der Ansprüche 1 und 2,
**dadurch gekennzeichnet,**
**daß** die Lamellen (56) ein im allgemeinen V-förmiges Profil haben, derart, daß die Luftkanäle nacheinander einen von der Außenfläche (18) zur Innenfläche (20) des Vorhanges absteigenden Bereich (60) und einen aufsteigenden Bereich (62) aufweisen.

5. Vorrichtung nach einem der Ansprüche 1 und 2,
**dadurch gekennzeichnet,**
**daß** sie Lamellen (16) mit einem im allgemeinen geradlinigen Profil und Lamellen (56) mit einem im allgemeinen V-förmigen Profil aufweist.

6. Vorrichtung nach einem der Ansprüche 1 bis 5,
**dadurch gekennzeichnet,**
**daß** die Lamellen (16; 56) nahe beieinander angeordnet sind, um zwischeneinander einen Zwischenraum (I) mit reduziertem Wert auszubilden, der mindestens fünfmal kleiner als die Breite (L) des Vorhanges zwischen seiner Außenfläche (18) und seiner Innenfläche (20) ist.

7. Vorrichtung nach Anspruch 6,
**dadurch gekennzeichnet,**
**daß** der Zwischenraum (I) zwischen zwei aufeinanderfolgenden Lamellen (16; 56), bei einer Breite (L) des Vorhanges von 6 bis 20 cm, zwischen 6 und 20 mm beträgt.

8. Vorrichtung nach einem der Ansprüche 1 bis 7,
**dadurch gekennzeichnet,**
**daß** die Lamellen (16; 56) voneinander getrennt und untereinander mit Aufhängungseinrichtungen (28, 34; 36; 40) verbunden sind, die sowohl auf der Seite der Außenfläche (18) als auch auf der Seite der Innenfläche (20) des Vorhanges angeordnet sind.

9. Vorrichtung nach Anspruch 8,
**dadurch gekennzeichnet,**
**daß** die Aufhängungseinrichtungen eine Vielzahl von vertikalen Fäden (28) aufweisen, von denen jeder mit Ringen (30) versehen ist, die paarweise einen Zwischenraum (I) aufweisen, der dem Zwischenraum (I) der Lamellen (16; 56) entspricht, wobei die Ringe (30) als Befestigungseinrichtungen für die Lamellen (16; 56) dienen.

10. Vorrichtung nach Anspruch 9,
**dadurch gekennzeichnet,**
**daß** jedem mit Ringen (30) versehenen vertikalen Faden ein glatter vertikaler Faden (34) zugeordnet ist, der die Lamellen (16; 56) nacheinander durchquert und durch die Ringe (30) hindurchgeht.

11. Vorrichtung nach Anspruch 8,
**dadurch gekennzeichnet,**
**daß** jede der Lamellen (16; 56) zwei Reihen beabstandeter Ringe (36) aufweist, die jeweils von zwei Längsrändern (32) der Lamelle ausgehend ausgebildet sind, wobei die Ringe (36) einer Lamelle die Ringe einer direkt darunter befindlichen Lamelle durchqueren.

12. Vorrichtung nach einem der Ansprüche 1 bis 3,
**dadurch gekennzeichnet,**
**daß** die Lamellen (16) durch eine ziehharmonikaartige oder zickzackförmige Faltung einer Bahn (44) aus dem dünnen Material ausgebildet sind, wobei die Aufhängungseinrichtungen (28, 34) sowohl auf der Seite der Außenfläche (18) als auch auf der Seite der Innenfläche (20) des Vorhanges angeordnet sind.

13. Vorrichtung nach Anspruch 4,
**dadurch gekennzeichnet,**
**daß** die Lamellen (56) mit V-förmigem Profil Abstandshalter (64) in Form von Buchsen aufweisen, die abwechselnd mit den Lamellen im Bereich des höchsten Punktes (58) des V-förmigen Profils angeordnet sind, so daß die beidseits angeordneten Aufhängungseinrichtungen (68) abwechselnd die Lamellen (56) und die Abstandshalter (64) durchqueren.

14. Vorrichtung nach einem der Ansprüche 8 bis 13,
**dadurch gekennzeichnet,**
**daß** die Aufhängungseinrichtungen (68) mindestens einen steifen oder nachgiebigen Faden aus einem Material aufweisen, das aus einem Metall, einem Kunststoff oder aus Glas ausgewählt ist.

15. Vorrichtung nach einem der Ansprüche 1 bis 7,
**dadurch gekennzeichnet,**
**daß** die Lamellen (16; 56) beidseits mit kammförmigen oder zackenförmigen Befestigungselementen (80) gehalten sind, die regelmäßig beabstandete Zähne (82) aufweisen, wobei die Elemente derart in Querschlitze (84) der Lamellen eingeführt sind, daß sich ihre Zähne in entgegengesetzte Richtungen erstrecken und quer und längs verstellt werden können, um die Ausrichtung der Lamellen zu verändern.

16. Vorrichtung nach einem der Ansprüche 1 bis 15,
**dadurch gekennzeichnet,**
**daß** die Verschlußeinrichtungen auf der Seite der Außenfläche (18) und/oder der Innenfläche (20) des Vorhanges vorgesehen sind.

17. Vorrichtung nach Anspruch 16,
**dadurch gekennzeichnet,**
**daß** die Verschlußeinrichtungen auf der Seite der Innenfläche (20) des Vorhanges eine Grundplatte (24) aufweisen, die eine Mauer berührend oder davon beabstandet angebracht ist.

18. Vorrichtung nach Anspruch 17,
**dadurch gekennzeichnet,**
**daß** die Grundplatte (24) ausgewählt ist aus einem Metallblech; einem Metallblech mit selektiver Oberfläche; einer dünnen Metallschicht mit selektiver Oberfläche, die auf einen Träger auf Mineralbasis aufgeklebt ist; und einer Platte auf Mineralbasis, die gegebenenfalls mit einem Überzug versehen ist, der die Absorption von Sonnenstrahlung begünstigt.

## Claims

1. Device for collecting solar energy and transferring it onto a receiving medium that is to be heated, comprising a number of essentially horizontal shaped elements (16; 56) spaced apart and superposed to form a curtain (10) having an outer face (18) that can be exposed to solar radiation and an inner face (20) that can be arranged on the side of the receiving medium (12), the shaped elements (16) between them defining a number of air ducts (22) extending between the outer face (18) and the inner face (20), closure means being provided for immobilizing the air contained in the ducts (22), and in which device the shaped elements (16; 56) are produced in the form of transparent or translucent lamellae with low solar radiation absorption properties and low thermal conductivity properties, and having a profile which has a rising end part ending at the inner face (20) of the curtain,
**characterized in that** the lamellae (16; 56) are obtained from a web of a thin material which is a woven or non-woven material based on inorganic or synthetic fibres, particularly glass fibres, this material having good transparency and low retention of radiated energy.

2. Device according to Claim 1, **characterized in that** the material of which the lamellae (16; 56) are formed is impregnated with a substance aimed at improving the tightness, transparency, brightness, reflective, rigidity or life characteristics of the lamellae.

3. Device according to either of Claims 1 and 2, **characterized in that** the lamellae (16) have a generally straight profile arranged so that it is inclined with respect to the horizontal so that the air ducts are directed upwards from the outer face (18) to the inner face (20) of the curtain.

4. Device according to either of Claims 1 and 2, **characterized in that** the lamellae (56) have a profile in the general shape of a V so that the air ducts have, in succession, a falling part (60) and a rising part (62) from the outer face (18) to the inner face (20) of the curtain.

5. Device according to either of Claims 1 and 2, **characterized in that** it comprises lamellae (16) having a generally straight profile and lamellae (56) having a profile in the general shape of a V.

6. Device according to one of Claims 1 to 5, **characterized in that** the lamellae (16; 56) are arranged close together so as to form a small gap (I) between them, this gap being at least five times smaller than the width (L) of the curtain between its outer face (18) and its inner face (20).

7. Device according to Claim 6, **characterized in that** the gap (I) between two consecutive lamellae (16; 56) is between 6 and 20 mm, for a curtain width (L) of between 6 and 20 cm.

8. Device according to one of Claims 1 to 7, **characterized in that** the lamellae (16; 56) are separated from one another and connected together by hanging means (28, 34; 36; 40) arranged here and there on the outer face (18) side and on the inner face (20) side of the curtain.

9. Device according to Claim 8, **characterized in that** the hanging means comprise a number of vertical filaments (28) each equipped with loops (30) spaced one from the next by a gap (I) corresponding to the gap (I) between the lamellae (16; 56), the said loops (30) serving as means of attaching the lamellae (16; 56).

10. Device according to Claim 9, **characterized in that** associated with each vertical filament (28) equipped with loops (30) is a plain vertical filament (34) which passes in succession across the lamellae (16; 56) and through the loops (30).

11. Device according to Claim 8, charactrerized in that each of the lamellae (16; 56) comprises two series of spaced-apart loops (36) formed respectively from two longitudinal edges (32) of the lamella, the loops (36) of one lamella passing through the loops of a lamella situated immediately beneath.

12. Device according to one of Claims 1 to 3, **characterized in that** the lamellae (16) are formed of a concertina or zigzag fold of a sheet (44) of thin material, hanging means (28, 34) being arranged here and there on the outer face (18) side and on the inner face (20) side of the curtain.

13. Device according to Claim 4, **characterized in that** the lamellae (56) with a V-shaped profile have spacers (64) in the shape of sleeves arranged so that they alternate with the lamellae in the region of the vertex (58) of the V-shaped profile, and hanging means (68) arranged here and there and which pass alternately through the lamellae (56) and the spacers (64).

14. Device according to one of Claims 8 to 13, **characterized in that** the hanging means (68) comprise at least one rigid or flexible filament made of a material chosen from a metal, a plastic or glass.

15. Device according to one of Claims 1 to 7, **characterized in that** the lamellae (16; 56) are held here and there by two fixing elements (80) in the form of combs or battlements, having uniformly spaced teeth (82), these elements being introduced into transverse slots (84) in the lamellae so that their teeth run in opposite directions and being capable of being adjusted transversely and longitudinally to alter the orientation of the lamellae.

16. Device according to one of Claims 1 to 15, **characterized in that** the closure means are provided on the outer face (18) side and/or on the inner face (20) side of the curtain.

17. Device according to Claim 16, **characterized in that** the closure means on the inner face (20) side of the curtain comprise an end plate (24) pressed into contact with or some distance from a wall.

18. Device according to Claim 17, **characterized in that** the end plate (24) is chosen from a sheet of metal; a metal sheet with a selective surface; a metal film with a selective surface bonded onto a support theoretically of inorganic basis; a sheet of inorganic basis possibly equipped with a coating encouraging the absorption of solar radiation.
